Europäisches Patentamt

European Patent Office

Office européen des brevets

(19)

(11) Veröffentlichungsnummer: **0 218 845**

**A1**

(12) # EUROPÄISCHE PATENTANMELDUNG

(21) Anmeldenummer: **86111246.4**

(22) Anmeldetag: **14.08.86**

(51) Int. Cl.⁴: **B60T 17/08**

(30) Priorität: **16.10.85 DE 3536767**

(43) Veröffentlichungstag der Anmeldung:
**22.04.87 Patentblatt 87/17**

(84) Benannte Vertragsstaaten:
**DE FR GB IT NL SE**

(71) Anmelder: **WABCO Westinghouse Fahrzeugbremsen GmbH**
**Am Lindener Hafen 21 Postfach 91 12 80**
**D-3000 Hannover 91(DE)**

(72) Erfinder: **Ewald, Jürgen**
**Würzburger Strasse 14**
**D-3014 Laatzen 1(DE)**
Erfinder: **Frania, Josef**
**An der Bauerwiese 10d**
**D-3000 Hannover 91(DE)**
Erfinder: **Glogowschek, Roland**
**Skagenhof 7**
**D-3000 Hannover 91(DE)**

(74) Vertreter: **Schrödter, Manfred**
**WABCO Westinghouse Fahrzeugbremsen GmbH Am Lindener Hafen 21 Postfach 91 12 80**
**D-3000 Hannover 91(DE)**

(54) Federspeicherzylinder, insbesondere druckmittelbetätigter Federspeicherbremszylinder für Strassenfahrzeuge.

(57) Federspeicherzylinder, insbesondere druckmittelbetätigter Federspeicherbremszylinder für Straßenfahrzeuge, mit einem zwischen dem Boden - (8) des Federspeicherzylinders und einem Federspeicherkolben (4) eingespannten, aus einer Schraubendruckfeder (7) bestehenden Federspeicher. Zwecks Verkürzung der Baulänge sowie der Gewichtsreduzierung des Federspeicherzylinders weist die Schraubendruckfeder eine nicht lineare Mantellinie und einen inkonstanten Drahtdurchmesser auf.

## Federspeicherzylinder, insbesondere druckmittelbetätigter Federspeicherbremszylinder für Straßenfahrzeuge

Die Erfindung betrifft einen Federspeicherzylinder gemäß dem Oberbegriff des Patentanspruchs 1.

Als Kraftspeicher für Federspeicherzylinder dient im allgemeinen eine Schraubendruckfeder, die in einer Federspeicherkammer des Federspeicherzylinders zwischen dem Zylinderboden der Federspeicherkammer und einem Federspeicherkolben eingespannt ist. Die Schraubendruckfeder ist durch ein Druckmittel belastbar, wodurch der Federspeicherkolben gegen die Kraft der Schraubendruckfeder von seiner unbelasteten Endstellung aus einen durch einen Anschlag begrenzten Hub ausführen kann. Der Federspeicherkolben steht mit einem Bremsgestänge in Wirkverbindung, derart, daß der vom Druckmittel unbelastete Federspeicherkolben von der Schraubendruckfeder in eine Stellung bewegt wird, in der die Bremsen des Fahrzeugs festgesetzt sind.

Dieser Funktion entsprechend ist der Federspeicherzylinder gewöhnlich mit der Achse des Fahrzeugs fest verbunden. Hierbei besteht jedoch das Problem, daß die an der Achse auftretenden Fahrschwingungen auf den Federspeicherzylinder übertragen und dort durch Massenbeschleunigungsmomente, hervorgerufen durch das Gewicht und durch das Kippmoment des mit der Achse mitschwingenden Federspeicherzylinders verstärkt werden.

Bei einem durch die DE-PS 22 18 070 vorbekannten Federspeicherzylinder der eingangs genannten Art wird diese unerwünschte Verstärkung der Achsschwingungen dadurch gemindert, daß als Federspeicher anstelle einer für diesen Verwendungszweck üblichen zylinderförmigen Schraubendruckfeder eine Schraubendruckfeder mit nichtzylindrischer Mantellinie verwendet wird. Durch das teilweise Ineinanderlegen der federnden Windungen während des Einfederungshubes wird bei gleicher Kraft-Weg-Kennlinie eine kürzere Baulänge der Feder und des Federspeicherzylinders und damit die erwünschte Gewichtsreduzierung erreicht.

Der Erfindung liegt die Aufgabe zugrunde, den Federspeicherzylinder der eingangs genannten Art so zu verbessern, daß im Vergleich zu dem bekannten Federspeicherzylinder mit einfachen Mitteln eine weitere Verkürzung der Baulänge, eine weitere Gewichtsreduzierung und dadurch eine Minderung unerwünschter Eigenschwingungen des Federspeicherzylinders auf der Fahrzeugachse erreicht wird.

Diese Aufgabe wird durch die im Patentanspruch 1 angegebene Erfindung gelöst. Weiterbildungen und vorteilhafte Ausführungsbeispiele sind in den Unteransprüchen angegeben.

Durch die bisher bei Federspeicherzylindern nicht bekannte Verwendung einer solchen Schraubendruckfeder mit der erwähnten Formgebung und in der beschriebenen Einbauweise ist es möglich, bei gleicher Kraft-Weg-Charakteristik eine Verkürzung der Baulänge und eine Gewichtsreduzierung von Federspeicherzylindern zu erreichen. Die Reduzierung des Gewichts im Bereich des Federspeichers und eine damit verbundene Verlagerung des Schwerpunktes wirkt sich besonders günstig auf das Kippmoment aus, wenn der Federspeicherzylinder an seinem dem Federspeicher abgewandten Ende an der Fahrzeugachse befestigt ist.

Die Erfindung hat ferner den Vorteil, daß durch einen geringeren Platzbedarf des Federspeicherzylinders günstigere Einbauverhältnisse in dem im allgemeinen knapp bemessenen Raum im Bereich der Achse des Fahrzeugs geschaffen werden.

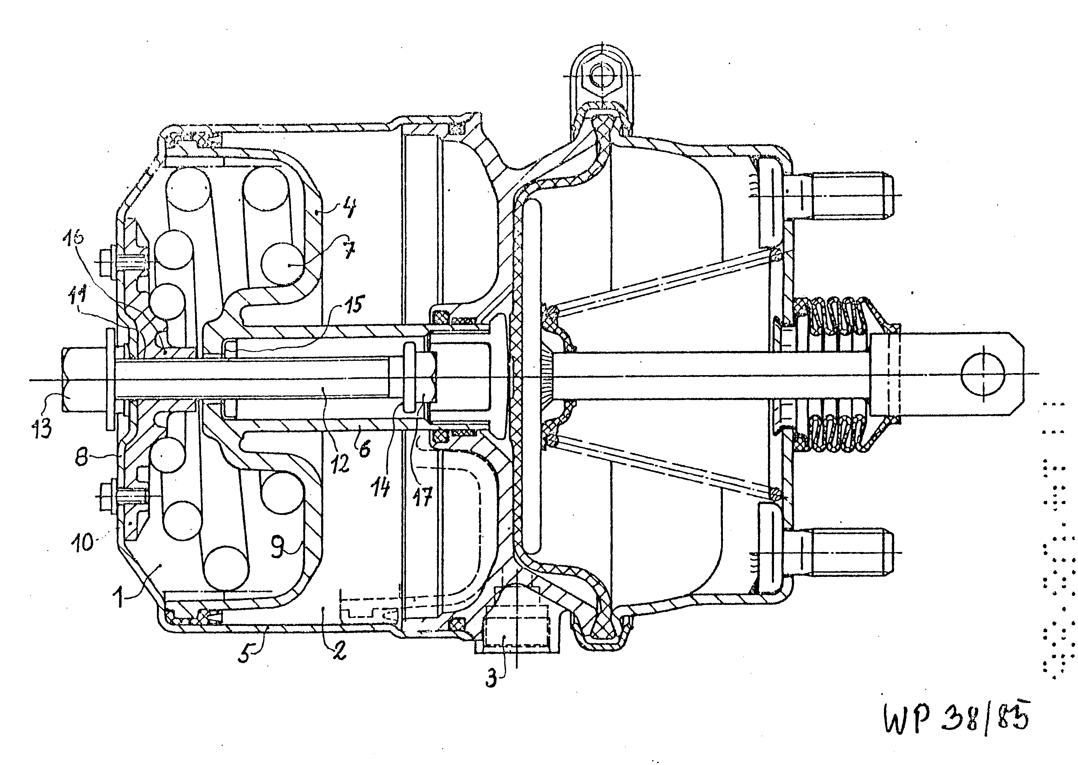

Die Erfindung wird anhand eines Ausführungsbeispieles, daß in der Zeichnung dargestellt ist, näher erläutert. Die Zeichnung zeigt einen Federspeicherzylinder mit einem Federspeicher, der aus einer Schraubendruckfeder mit nichtzylindrischer Mantellinie und inkonstantem Drahtdurchmesser besteht.

In der Zeichnung ist ein an sich bekannter Federspeicherzylinder mit einer Federspeicherkammer 1 und einer Druckmittelkammer 2 dargestellt. Die Druckmittelkammer ist über einen Druckmittelanschluß 3 mit Druckluft beaufschlagbar, wodurch ein Federspeicherkolben 4 im Zylinder 5, der einen Teil des Federspeicherzylinders bildet, gegen die Kraft einer Schraubendruckfeder 7 in eine in der Zeichnung dargestellte Bremslösestellung bewegbar ist. Der Federspeicherkolben 4 steht über eine Kolbenstange 6 mit einem nichtdargestellten Bremsgestänge in Wirkverbindung, derart, daß bei entlüfteter Druckmittelkammer 2 der Federspeicherkolben 4 durch die Feder 6 in eine in der Zeichnung gestrichelt dargestellte Stellung bewegt wird, in der die Bremsen des Fahrzeugs über das Bremsgestänge festgesetzt sind.

Die auf die beschriebene Weise festgesetzten Bremsen sind, z B. bei einem Ausfall des Druckluftvorrats, mechanisch lösbar. Die hierzu dienende Einrichtung besteht aus einem an der Innenseite des Zylinderbodens 8 des Zylinders 5 angeordneten Federteller 10, einem mit dem Federteller 10 verbundenen Gewindestutzen 16 mit einem Innengewinde 11 und einem als Bremslöseschraube dienenden Schraubenbolzen 12, der in den Gewindestutzen 16 eingeschraubt und in seiner Längsrichtung verstellbar ist.

Ein mit dem Schraubenbolzen 12 lösbar verbundener Kopf 13 ist für das Ansetzen eines Werkzeuges geeignet, mit dem der Schraubenbolzen 12 um einen vorgegebenen Hub aus dem Federspeicherzylinder herausgedreht werden kann. Eine Schulter 14 eines mit dem Schraubenbolzens 12 verbundenen Schraubenkopfes 17 legt sich dabei an eine Stützfläche 15 des Federspeicherkolbens 4 an, so daß der Federspeicherkolben 4 gegen die Kraft der Schraubendruckfeder 7 in die in der Zeichnung dargestellte Bremslösestellung bewegbar ist.

Die Schraubenfeder 7 hat eine Formgestaltung, wie sie an sich aus der DE-OS 20 00 472 bekannt ist. Sie weist eine nichtzylindrische Mantellinie auf, wobei der Windungsdurchmesser im Mittelteil der Feder am größten ist und die Drahtdicke nach beiden Enden der Feder hin abnimmt. Dadurch wird eine Raum-und Werkstoffausnützung erreicht, die günstiger ist als bei der gemäß der eingangs erwähnten DE-PS 22 18 070 verwendeten Feder, die zwar eine nichtzylindrische Mantellinie, jedoch eine konstante Drahtdicke aufweist.

Die Schraubendruckfeder 7 stützt sich mit einem Teilstück ihrer Endwindungen auf den Federteller 10 und auf der der Schraubendruckfeder 7 zugewandten Seite 9 des Federspeicherkolbens 4 ab. Die übrigen Windungen der Schraubendruckfeder 7 sind in bekannter Weise so gestaltet, daß sie sich während des Einfederns nicht gegenseitig abstützten oder an einer Wandung der Federspeicherkammer 1 zur Anlage kommen können. Dadurch behält die Schraubendruckfeder 7 ihre für Federspeicherzylinder vorteilhafte lineare Kraft-Weg-Charakteristik.

Die zu den Federenden hin abnehmende Drahtdicke der Schraubendruckfeder 7 gestattet ein engeres Einrollen der Endwindungen als es bei einer Schraubendruckfeder möglich wäre, deren Drahtdicke sich zu den Endwindungen hin nicht verjüngen würde. Hierdurch wird der Materialeinsatz der Schraubendruckfeder 7 verringert, wodurch eine weitere Gewichtsreduzierung des Federspeicherzylinders erreicht wird.

Das Einrollen der durch den Federspeicherkolben 4 geführten Endwindung der Schraubendruckfeder 7 ist durch die Form des Federspeicherkolbens 4 begrenzt. Dahingegen ist das zum Zylinderboden 8 weisende Federende so eng einrollbar wie es der Federwerkstoff zuläßt.

Die hierdurch nahezu zentral in den Zylinderboden 8 eingeleitete Federkraft wird durch den Federteller 10 abgestützt. Die auf den Zylinderboden 8 aufliegende Fläche des Federtellers 10 ist so bemessen, daß eine Deformation des Zylinderbodens 8, durch die auf ihn wirkende Federkraft, verhindert wird.

Obgleich der Federteller 10 nicht zur Gewichtsreduzierung des Federspeicherzylinders beitragen kann, läßt sich durch seinen Einsatz die Wandstärke des Zylinders 5 gewichteinsparend auf ein Minimum reduzieren.

## Ansprüche

1. Federspeicherzylinder, insbesondere druckmittelbetätigter Federspeicherbremszylinder für Straßenfahrzeuge, mit einem zwischen dem Zylinderboden und einem Federspeicherkolben eingespannten Federspeicher, der folgende Merkmale aufweist:

a) Der Federspeicher besteht aus einer Schraubendruckfeder mit nicht zylindrischer Mantellinie derart, daß der Windungsdurchmesser im Mittelteil der Feder am größten ist;

b) die Schraubendruckfeder stützt sich mit ihren beiden Endwindungen am Zylinderboden und an der dem Zylinderboden zugewandten Seite des Federspeicherkolbens ab, derart, daß bei Belastung bis zum Maximum alle federnden Windungen nicht abgestützt sind;

gekennzeichnet durch folgendes Merkmal:

c) Die Drahtdicke der Schraubendruckfeder (7) nimmt nach beiden Federenden hin ab.

2. Federspeicherzylinder nach Anspruch 1, dadurch gekennzeichnet, daß die Drahtdicke von einer Windung im mittleren Bereich der Schraubendruckfeder (7) nach beiden Federenden hin abnimmt.

3. Federspeicherzylinder nach Anspruch 1, dadurch gekennzeichnet, daß die Drahtdicke von der mittleren Windung der Schraubendruckfeder (7) nach beiden Federenden hin abnimmt.

4. Federspeicherzylinder nach Anspruch 1, dadurch gekennzeichnet, daß ein Federteller (10) vorgesehen ist, der auf der Innenseite des Zylinderbodens (8) eines einen Teil des Federspeicherzylinders bildenden Zylinders (5) angeordnet ist.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | US-A-3 331 291 (RUMSEY) <br> * Spalte 3, Zeilen 21-45; Figuren 1-3 * | 1-3 | B 60 T 17/08 |
| | --- | | |
| Y,D | DE-A-2 000 472 (AHLE) <br> * Patentanspruch; Figur * | 1-3 | |
| | --- | | |
| A | US-A-3 302 530 (DOBRIKIN) | | |
| | --- | | |
| A | GB-A-1 192 337 (BROMS REGULATOR) | | |
| | --- | | |
| A,D | FR-A-2 133 621 (BENDIX) | | |
| | ----- | | |

| | RECHERCHIERTE SACHGEBIETE (Int. Cl.4) |
|---|---|
| | B 60 T |

Der vorliegende Recherchenbericht wurde für alle Patentansprüche erstellt

| Recherchenort | Abschlußdatum der Recherche | Prüfer |
|---|---|---|
| DEN HAAG | 14-01-1987 | HARTEVELD C.D.H. |